# EUROPEAN PATENT APPLICATION

(11) **EP 4 711 738 A1**
(43) Date of publication of application: **18.03.2026**
(21) Application number: 24200939.7
(22) Date of filing: 17.09.2024
(51) Int. Cl.: G01N 1/42

(54) **SAMPLE PREPARATION METHOD AND DEVICE FOR PREPARING A VITRIFIED SAMPLE LAYER ON A SAMPLE HOLDER GRID FOR SUBSEQUENT CRYO ELECTRON MICROSCOPY**

(71) Applicant: European Molecular Biology Laboratory, 69117 Heidelberg (DE)
(72) Inventor: PAPP, Gergely, 38100 Grenoble (FR)
(74) Representative: Qip Patent & Recht Dr. Kuehn & Partner mbB

(57) **Abstract**

A sample preparation method and device for preparing a vitrified sample layer (1) on a sample holder grid (3) for subsequent analysis of physical sample characteristics, particularly for subsequent cryo electron microscopy, are presented. The method comprises:
providing the sample holder grid (3) with sample solution (5) on at least one surface of the sample holder grid (3);
- spreading the dispensed sample solution (5) along the surface (7) of the sample holder grid (3) using one or a sequence of multiple shock pressure waves (9) being generated by a shock pressure wave generator (11) emitting and directing the one or multiple shock pressure waves (9) via at least one nozzle (13) onto the surface (7) of the sample holder grid (3);
- vitrifying the spread sample solution (5) by exposing it to a cooling liquid (17) at cryogenic temperatures.

## Description

### FIELD OF THE INVENTION

The present invention relates to a sample preparation method for preparing a vitrified sample layer on a sample holder grid for subsequent analysis of physical sample characteristics, particularly for subsequent cryo electron microscopy. Furthermore, the invention relates to a device configured for implementing or controlling such method.

### BACKGROUND OF THE INVENTION

There are various techniques for analysing physical characteristics of a sample such as microscopy, spectroscopy, crystallography, etc. In these techniques, it may be necessary to prepare the sample in a form of a thin vitrified film.

In the following, a background as well as embodiments of the invention presented herein will be mainly described with reference to electron microscopy as forming one possible type of analyzing technique.

Electron microscopy may be used to examine extremely small structures or particles for example in a nanometre range. In order to enable examining biological samples such as biological cells or proteins, cryo electron microscopy (CryoEM) has been developed. Cryo electron microscopy is a form of transmission electron microscopy (TEM), in which biological samples are examined at cryogenic temperatures of below -123 °C (150 K). A specific form of cryo electron microscopy is (in-situ) cryo electron tomography.

In cryo electron microscopy, samples have to be prepared in very thin layers. Generally, the samples are quick-frozen and thereby vitrified before being inserted into a transmission electron microscope.

Typically, CryoEM data are obtained from sample particles embedded in a vitrified solution such as amorphous ice set on a CryoEM sample holder. Therein, the CryoEM sample holder may consist for example of a 3mm diameter 10 to 20 micrometre thickness metal grid made e.g. of copper, gold or another metal and being covered for example with a holey carbon film. The carbon film may have a thickness of for example about 10 nm and may include a matrix of micron-sized holes that holds a sample solution. The sample solution may typically comprise the samples to be examined and may further include water, salts and/or cryo-protectant.

Upon sample preparation, the sample solution may be dispensed on a grid of a CryoEM sample holder, may then be spread and may finally be vitrified by rapidly cooling it for example in liquid ethane. An optimal sample thickness may be around 100 nm, which may allow having in the holes of the CryoEM sample holder a single layer of sample particles embedded in the vitrified ice.

Conventional sample preparation techniques for CryoEM examination may involve a number of manual steps and may suffer from poor reproducibility. Particularly, it may be difficult to prepare and/or identify samples having a correct thickness to enable examining single particles or cells during CryoEM examination.

In order to overcome such difficulties, the applicant of the present application has developed a cryostat and a sample thickness measuring arrangement using such cryostat as well as a method for measuring a thickness of a sample using such cryostat. Details of such approach have been disclosed in the prior patent application WO 2020/058140 A1. Further Information about a technical background regarding CryoEM and its requirements as well as details about the prior approach including the cryostat and its application in the sample thickness measuring arrangement and method are given in the prior patent application.

The present application relates to a further development of a sample preparation method for preparing a vitrified sample layer for subsequent analysis of physical sample characteristics, particularly for subsequent cryo electron microscopy. It is to be noted that details disclosed with regards to embodiments of the prior approach may be applied or adopted to embodiments of the further development described in the present application. Accordingly, the entire content of the prior application shall be incorporated herein by reference.

### SUMMARY OF THE INVENTION AND OF EMBODIMENTS

There may be a need for an advanced method and device for preparing samples for subsequent analysis of physical sample characteristics, particularly for cryo electron microscopy. Specifically, there may be a need for enabling a sample preparation with high quality, high throughput and/or high reproducibility, requiring relatively simple equipment and/or enabling a preparation of various types of samples, particularly cryo-EM samples.

Such needs may be met with the subject-matter of the independent claims. Further exemplary embodiments may be derived from the dependent claims, the following description and the accompanying figures.

According to a first aspect of the present invention, a sample preparation method for preparing a vitrified sample layer on a sample holder grid for subsequent analysis of physical sample characteristics, particularly for subsequent cryo electron microscopy is proposed. The method comprises at least the following steps, preferably in the indicated order:
- providing the sample holder grid with sample solution on at least one surface of the sample holder grid;
- spreading the sample solution along the surface of the sample holder grid using one or a sequence of multiple shock pressure waves being generated by a shock pressure wave generator emitting and directing the one or multiple shock pressure waves via at least one nozzle onto the surface of the sample holder grid;
- vitrifying the spread sample solution by exposing it to a cooling liquid at cryogenic temperatures.

According to a second aspect of the invention, a sample preparation device is proposed, the sample preparation device being configured for implementing, executing and/or controlling the sample preparation method according to an embodiment of the first aspect of the invention.

Only as some introductory or summarizing notes and without limiting the scope of the invention, basic ideas underlying embodiments of the invention and associated possible advantages may be roughly described as follows:
As already briefly indicated in the above introductory portion, precise and reproducible sample preparation may be essential to obtain e.g. good CryoEM measurement results. Among various criteria that define a good sample grid, a correct and/or uniform sample thickness may be a mandatory prerequisite.

In embodiments of the method proposed herein, a high quality sample may be prepared for subsequent analysis by, after for example dispensing a sample solution on a surface of a sample holder grid and before vitrifying such sample solution by exposing it to a cooling liquid, specifically spreading the dispensed sample solution along the surface of the sample holder grid. Therein, such specific spreading is established by using one or a sequence of multiple shock pressure waves emitted by a shock pressure wave generator directing the shock pressure waves preferably at a grazing angle onto the surface of the sample holder grid.

Such shock pressure waves have a specific time-dependent pressure profile with a very steep pressure rise in an initial phase. Due to their specific characteristics, such shock pressure waves enable a very fast, highly reproducible and uniform spreading of the dispensed sample solution.

As discussed in detail herein, various characteristics of the shock pressure waves and parameters correlating with such shock pressure waves as well as additional method steps before or after spreading the dispensed sample solution may be advantageous and may help improving an overall quality of the prepared sample.

Subsequently, possible features and characteristics of embodiments of the invention and associated possible advantages will be described in more detail.

The method proposed herein may be used for preparing various types of samples for subsequent analysis of physical sample characteristics, particularly for subsequent cryo electron microscopy. For example, cryo-EM may allow investigating a structure of macromolecular assemblies both in purified solutions using single-particle analysis (SPA) and inside cells using cryo- electron tomography (cryo-ET). Particularly, the method proposed herein may be used for various applications such as for
- preparing samples for single particle analysis, including e.g. protein solution provided at a surface of the sample holder grid,
- for preparing samples including cells in suspension such as to provide monocellular organisms at a surface of the sample holder grid, or
- for preparing samples including cells grown on the grid such as to provide cells adherent at a surface of the sample holder grid.

It may be noted that with recent advances in cryo-EM/ET methods, preparing high-quality vitreous samples may remain a difficult task.

It shall further be noted that, while sample preparation is described herein mainly with reference to samples to be analysed in subsequent cryo-EM, the method described herein may also be applied for preparing other types of samples to be further studied using microscopy, spectroscopy, crystallography, etc. relying on techniques using photons, electrons and/or neutrons for sample analysis.

The proposed method starts with providing the sample holder grid with sample solution on at least one surface of the sample holder grid. The sample solution may be disposed at the sample holder grid in various manners. For example, the sample solution may be dispensed on a surface of a sample holder grid. Alternatively, in a case of adherent cell preparation, cells may incubated in sample solution directly on the sample holder grid and may optionally then be manually inserted into a thermally regulated grid rack ahead of the automated preparation process.

The sample solution may be any liquid in which samples to be analysed e.g. in subsequent cryo-EM are comprised. Particularly, the term "sample solution" may be interpreted broadly herein and may comprise solutions, suspensions or other types of liquid sample-containing matter. The sample solution may comprise a liquid solvent or a liquid matrix material in which the samples are included. Such solvent or matrix material may comprise any substances which are liquid at non-cryogenic temperatures and which therefore may be handled in a liquid state for example at room temperature and which become solid at cryogenic temperatures. For example, the sample solution may comprise water, alcohol, etc. as a liquid solvent or a liquid matrix material. The samples may be proteins, cells such as monocellular organisms, etc. The proteins or cells may be dispensed or mixed with the solvent or may be grown in the solvent.

The sample holder grid may have structural and/or functional characteristics as described further above in the introductory portion. Particularly, the sample holder grid may comprise a thin foil including microscopic apertures. The foil may be made with metallic or carbon material, particularly amorphous carbon material. The sample solution may be dispensed on a single surface or at both opposing surfaces of such sample holder grid. Such surface(s) may be macroscopically flat. Upon dispensing the sample solution, the surface of the sample holder grid may be oriented in arbitrary orientations such as horizontal, vertical or diagonal.

The sample solution may be provided on the sample holder grid using various deposition techniques. For example, the sample solution may be dispensed by ejecting drops from a dispenser. Such dispenser may function similar to an inkjet printer head and may eject microscopic droplets of sample solution in a direction towards the sample holder grid. The dispensed sample solution may adhere to the sample holder grid surface for example due to surface tension forces and may form a single adherent drop or multiple adherent drops.

Subsequently, the sample solution is spread along the surface of the sample holder grid using at least one shock pressure wave or preferably using a sequence of multiple shock pressure waves. Such spreading of dispensed or otherwise provided sample solution may be used to spread samples in the suspension on the surface of the sample holder grid or to control an amount of liquid around specimen adherent to the sample holder grid. In the latter case, solution used during incubating cells adherent to the sample holder grid surface may be spread or may be locally removed to a major extend such that at most a thin layer of sample solution remains adjacent and/or on top of the adherent cells.

Therein, specific physical characteristics of the shock pressure waves as well as a manner in which these shock pressure waves are applied and directed to the dispensed sample solution on the sample holder grid surface may help spreading the sample solution in a very fast, uniform and/or reproducible way.

Particularly, shock pressure waves generally follow a specific waveform, i.e. their time-dependent pressure profile has a specific form. Such waveform is also known as Friedlander waveform. Therein, when a pressure blast is released, it will start to propagate in space with a very steep front edge, i.e. with a very suddenly rising positive pressure. When this front edge reaches a sample solution drop to be spread on the surface of the sample holder grid, the sample solution drop is displaced due to a pressure differential on both sides of the drop. Whilst the pressure wave is propagating along the surface of the sample holder grid, the sample solution drop is pushed ahead. Meanwhile, due to, inter-alia, surface charges at the surface of the sample holder grid serving as sample support, the drop will leave a trace behind. It is this trace of spread sample solution which may then form an intended uniform thin film of sample solution required for subsequent vitrification and finally for physical analysis such as cryo-EM. The positive pressure interval of the blast shock pressure wave is then followed by a negative pressure interval which has an aspiration effect on the sample solution spread on the surface of the sample support.

The shock pressure waves are generated by a shock pressure wave generator. Such shock pressure wave generator typically has at least one nozzle through which the shock pressure waves are ejected. The nozzle is directed in a predefined orientation such that the ejected shock pressure wave propagates in an intended direction.

Specifically, in an embodiment of the method proposed herein, the shock pressure waves shall preferably reach the surface of the sample holder grid and the sample solution dispensed thereon at a grazing angle. Such grazing angle may for example be below 40°, preferably below 30°, below 25°, below 20°, below 15° or even below 10°, but generally above 2° or above 5°. Due to being applied at such grazing angle, the shock pressure waves may effectively push forward and spread the sample solution drops along the surface of the sample holder grid.

Subsequently, the spread sample solution forming a thin film is vitrified by exposing it to a cooling liquid at cryogenic temperatures. The cooling liquid may be for example a substance which is still liquid, i.e. non-frozen, at cryogenic temperatures and may also be referred to herein as coolant. Typically, cryogenic temperatures are defined to be below 150 K (- 123°C). For example, the cooling liquid may be liquid ethane. Upon coming into direct contact with such cooling liquid, the thin film of sample solution rapidly solidifies and thereby forms a vitrified film. Such shock-frozen and thereby vitrified film generally has a glassy structure, i.e. is substantially non-crystalline.

The sample(s) included in such vitrified sample solution film may then be analysed for physical characteristics using for example cryo-EM or other types of physical characterisation techniques.

According to an embodiment, the shock pressure waves are generated by a shock pressure wave generator emitting and directing the shock pressure waves via two nozzles being arranged at opposing sides of the sample holder grid such that shock pressure waves emitted via the opposing nozzles impact onto opposing surfaces of the sample holder grid such as to equilibrate orthogonal forces effected by the shock pressure waves onto the sample holder grid.

In other words, the shock pressure waves shall be generated with a generator having at least two separate nozzles. Therein, these nozzles are arranged at opposite sides of the sample holder grid and therefore also of the dispensed sample solution such that they act onto the sample solution droplets from different directions. Particularly, the nozzles are arranged and oriented such that the pressure waves ejected therefrom reach the sample holder grid and the sample solution droplets arranged thereon at an angle of incidence relative to each other. Such angle of incidence should generally be substantially smaller than 180°, i.e. for example smaller than 130°, preferably smaller than 110°, smaller than 90° or smaller than 70°, but preferably larger than 10°, larger than 30°, larger than 40° or larger than 50°. For example, the angle of incidence is advantageously in a range of 40°± 10°. Accordingly, in a standard usage, the sample solution droplet(s) is/are pushed away by one of the shock pressure wave(s) ejected by a first one of the nozzles and the other wave(s) ejected by an opposing one of the nozzles is there to equilibrate the pressure on both side of the sample holder grid, therefore avoiding bending it or breaking the very thin support foil.

Arranging the nozzles of the pressure wave generator at a distance to each other and at least partly opposing to each other and thereby directing the shock pressure waves from opposite sides at a predefined angle of incidence relative to each other and at a grazing angle relative to the surface of the sample holder grid may help spreading and distributing the dispensed sample solution along the sample holder grid surface in a precise, controllable and reproducible manner. Therein using two shock wave generator heads with nozzles, respectively, arranged with a grazing angle to the sample holder grid surface at opposing sides of the sample holder grid and at an angle of incidence between them may help exercising a symmetrical effort on both sides of the sample holder grid and of the sample solution drops on the sample holder grid, thereby, inter alia, avoiding excessive bending forces being applied to the sample holder grid. The grazing angle and/or angle of incidence may help pushing the drops in a well-defined direction.

According to an embodiment, the shock pressure waves are generated with a maximum pressure of between 100 hPa (100 hecto-Pascal = 0.1 bar) and 10000 hPa (= 10 bar).

Expressed differently, a maximum pressure corresponding to an amplitude of the shock pressure waves may be set to be at least 100 hPa, preferably at least 300 hPa (= 0.3 bar), but generally lower than 10000 hPa, preferably lower than 5000 hPa (= 5 bar), preferably lower than 4000 hPa (= 4 bar), lower than 3000 hPa (= 3 bar) or lower than 2500 hPa (= 2.5 bar). Generally, the amplitude of the shock pressure wave defines a differential pressure over a sample solution drop that will cause the displacement of this drop along the surface of the sample holder grid. The indicated maximum pressure range has been found to provide for efficient and controllable spreading of the dispensed sample solution.

According to an embodiment, the shock pressure waves are generated with durations of a positive pressure interval being between 1 ms and 500 ms.

In other words, a positive pressure portion of a shock pressure wave waveform shall last for more than 1 ms, preferably more than 2 ms or more than 5 ms, but typically less than 500 ms, preferably less than 300 ms, less than 200 ms, less than 100 ms or less than 50 ms. Therein, the duration of the shock pressure wave tunes a delay between the positive and negative pressure intervals. The indicated duration range has been found to provide for efficient and controllable spreading of the dispensed sample solution.

According to an embodiment, the sequence of multiple shock pressure waves comprises between 2 and 100 pressure waves.

Expressed differently, the dispensed sample solutions shall be spread using at least two pressure waves, preferably at least three pressure waves, at least four pressure waves or at least five pressure waves, but typically less than 100 pressure waves, preferably less than 50 pressure waves, less than 30 pressure waves or less than 20 pressure waves. These shock pressure waves are generated in a sequence, i.e. one after the other. The shock pressure waves in the sequence may be identical. Alternatively, waveforms of the pressure waves may be varied throughout the sequence for example with regards to a maximum pressure, a duration, a proportion of positive pressures and negative pressures, etc. The shock pressure waves may be generated in constant time intervals or in varying time intervals. The indicated number or range of generated sequential shock pressure waves has been found to provide for efficient and controllable spreading of the dispensed sample solution.

According to an embodiment, the shock pressure waves are generated with a pause between subsequent shock pressure waves being between 1 ms and 50 ms.

In other words, the shock pressure waves may be generated such that between subsequent shock pressure waves there is a pause. In such pause, there is no substantial positive pressure but there may be a negative pressure acting onto the dispensed sample solution. Such pause may last at least one millisecond, preferably at least 2 ms but generally less than 20 ms, preferably less than 15 ms or less than 10 ms. The pause between the shock pressure waves may permit the liquid sample solution to relax on the surface of the sample holder grid, thereby helping obtaining a uniformity in thickness of the spread sample solution.

According to an embodiment, during the spreading of the dispensed sample solution, the sample holder grid and the shock pressure wave generator are moved relative to each other in a displacement direction parallel to the surface of the sample holder grid.

Expressed differently, upon spreading the dispensed sample solution, the sample holder grid and the shock pressure wave generator shall preferably not be stationary relative to each other but should be displaced along a displacement direction. Such displacement direction should be parallel to the sample holder grid. Particularly, the displacement direction may be linear. The displacement direction typically corresponds to the opposite direction in which the dispensed sample solution is to be spread along the sample holder grid surface.

Generally, shock pressure waves are losing their energy when they are propagating through a pressure transmission medium such as air. Accordingly, the farther a portion of the sample solution is away from the shock pressure wave generator, the lower will be an amplitude of the positive pressure reaching such sample solution portion. Therefore, in order to obtain a substantially constant positive pressure wave amplitude throughout the surface of the whole sample holder grid, the sample holder grid may be successively moved relative to the shock pressure wave generator during the release of the shock pressure waves.

According to a further specified embodiment, while spreading the sample solution along the surface of the sample holder grid, the sample holder grid and the shock pressure wave generator are moved relative to each other by a distance of between 0.1 mm and 5 mm.

In other words, it may be preferable to displace the sample holder grid and the shock pressure wave generator relative to each other with a predefined velocity such that both components are moved relative to each other by at least 0.1 mm, preferably at least 0.3 mm or at least 0.5 mm, but typically at most 5 mm, preferably at most 3 mm or at most 2 mm during the entire process of spreading the sample solution using the one or multiple shock pressure waves. Displacement velocities in the indicated range have been found to result in fast and homogeneous spreading of the sample solution.

According to an embodiment, the method further comprises, prior to a step of dispensing the sample solution, a step of treating the surface of the sample holder grid for enhancing its hydrophilic characteristics.

Expressed differently, before the sample solution is dispensed on the surface of the sample holder grid, this surface may be specifically treated such as to make it more hydrophilic. Such increased hydrophilicity may improve the spreading effect affected by the shock pressure waves.

Generally, hydrophilic characteristics of the surface may be changed or enhanced in various manners and using various techniques.

According to a further specified embodiment, the surface of the sample holder grid is treated by submitting it to a plasma, particularly to a plasma generated by one of an atmospheric plasma treatment torch, glow discharge and plasma-cleaning.

In other words, the hydrophilicity of the sample holder grid surface may be increased by applying a plasma, at or in contact with this surface. Such plasma generally comprises charged particles such as electrons and ions which, upon impacting onto the surface, may change its physical and/or chemical characteristics, thereby inducing modified hydrophilic characteristics at this surface. The plasma may be generated using various techniques.

Expressed differently, plasma treatment may be applied to the surface of the sample holder grid in order to make it more hydrophilic, thereby enhancing the sample spreading effect obtained with the shock waves. A technology used for such plasma treatment may be glow discharge, plasma-cleaning or atmospheric plasma treatment torch.

For example, using an atmospheric plasma treatment torch may enable a rapid and controlled enhancement of grid hydrophilicity without necessarily putting the grid into a vacuum chamber. The plasma torch may be set up on a fixed holder, oriented perpendicularly to the grid surface and outputs a typical power of about 1 kW at a typical frequency of e.g. 21 kHz. During plasma treatment, the sample holder grid may be moved back and forth several times, for example at a distance of about 12 mm in front of the torch, to charge the surface of the grid without damaging a gripper that holds the sample support. For example, 15 such passages at a total duration of about 10 seconds may typically be performed before dispensing sample solution on the sample holder grid surface.

As a further alternative for affecting the hydrophilic characteristics of the sample holder grid surface, one or more hydrophilic chemical coatings, may be applied.

According to an embodiment, the sample solution is dispensed using a picoliter drop dispenser dispensing between 1 and 500 drops of the sample solution onto the surface of the sample holder grid with at least one of the following conditions applying:
- the drops have a volume of between 5 pl and 500 pl, and/or
- a dispensing frequency is between 0.5 Hz and 20000 Hz, and/or
- a drop temperature is between 1°C and 60°C.

In other words, the sample solution is dispensed onto the sample holder grid surface as one or multiple microscopic drops ejected by a drop dispenser which is specifically configured for ejecting picoliter drops. Therein, each of the drops may have a volume of at least 5 pl (picoliter), preferably at least 10 pl or at least 20 pl, but generally at most 500 pl, preferably at most 300 pl or at most 200 pl. The drops may be ejected by the drop dispenser sequentially at a frequency of at least 0.5 Hz, preferably at least 1 Hz, at least 10 Hz, at least 20 Hz or at least 100 Hz, but are generally at most 20 kHz, preferably at most 10 kHz or at most 2 kHz. Therein, a temperature of the drops may be set to at least 1°C, preferably at least 2°C or at least 5°C, but at most 60°C, preferably at most 50°C or at most 40°C.

Expressed differently, to put the sample solution onto the sample support in a controlled manner, one or more picoliter drop dispenser heads may be used. Such drop dispenser heads may permit to dispense a precise volume at a precise position on the surface of the sample holder grid. A drop size is typically of 20 - 200 pl and dispensing frequency of 1 - 10000 Hz. Particularly, e.g. 5 to 200 drops are dispensed on the surface of the sample holder grid. A drop dispensing module including the drop dispenser heads may be mounted on a robotised system to facilitate a reliable movement of the dispenser heads between modules of a machine. The dispenser heads may be mounted in a temperature regulated dock. Temperature regulation of a pipette dock may be mediated by a Peltier element connected to a ventilated heat sink. A temperature range may be 2 to 40°C. Temperature regulation of the drop dispenser heads may permit to ensure that the sample is stored at an optimised temperature during the process, thereby avoiding any damage due to for example excessive temperature variations.

According to an embodiment, the spread sample solution is vitrified by exposing it to a jet of cooling liquid.

In other words, while samples may conventionally be vitrified by dipping or plunging them into cryogenic cooling liquid, it has been found that the vitrification process may be improved by instead exposing the spread sample solution to a jet of such cooling liquid. Upon such vitrification procedure, cryogenic cooling liquid may be stored in a reservoir and may be ejected as a jet directed onto the surface of the sample holder grid on which the sample solution has previously been spread. Upon coming into contact with the extremely cold liquid, the sample solution rapidly solidifies in a vitrification process.

Expressed differently, in order to vitrify the specimen on the sample holder grid, the grid has to be rapidly cooled down to cryogenic temperatures. This can be realised by putting the grid into contact with a cryogen such as liquid ethane, propane, nitrogen, etc. Preferably, a liquid ethane jet at cryogenic temperature may be used to proceed to the vitrification of the sample solution on the sample support. For such purpose, a vitrification module may include a Dewar vessel that is automatically topped-up with liquid nitrogen, a temperature-regulated ethane reservoir with two output orifices facing each other and an ethane recycling pool. Ethane is liquefied in the reservoir by flowing ethane gas through it. Ethane jets are generated by pressurising the ethane reservoir to push cryogen towards jetting orifices. Once cooling jets are stable for about 500 ms, the grid may be driven between the jets' collision points to achieve sample vitrification. Using liquid ethane jets enables higher cooling rates than plunge-freezing, particularly in combination with the specific shock pressure wave based spreading of the sample solution proposed herein, thereby permitting e.g. to reliably vitrify large cells that is hardly possible with plunge-freezing systems.

According to a further specified embodiment, during vitrifying the spread sample solution, the sample holder grid and the jet of cooling liquid are moved relative to each other such that the jet of cooling liquid moves from one lateral edge of the spread sample solution to an opposite lateral edge of the spread sample solution.

In other words, instead of for example directing the jet of cooling liquid centrally onto the sample holder grid and keeping it stationary at such position, it has been found that successively moving the jet of cooling liquid relative to the sample holder grid may significantly improve a vitrification result. Particularly, the jet of cooling liquid may be established already prior to its first contact with the sample solution on the sample holder grid and the sample holder grid may then be displaced relative to such established jet e.g. in a direction orthogonal to the direction of the jet. Accordingly, an outer circumference of the sample holder grid reaches the jet of cooling liquid and, upon further displacing the jet and the sample holder grid relative to each other, the jet successively moves from a first lateral edge of the spread sample solution to an opposite lateral edge thereof. As a result of such motion, the sample solution does not initially vitrify at a centre and then successively vitrifies towards circumference but, instead, starts to vitrify at the first edge and a vitrification front then continuously moves together with a position of the impacting jet of cooling liquid in a direction towards the opposing second edge of the sample solution. It has been observed that, as a result of such successive and directed vitrification, a quality of the vitrified sample solution may be significantly enhanced.

According to an embodiment, the method further comprises controlling environmental parameters including at least one of a temperature and a humidity during at least one of the dispensing sample solution and the spreading the dispensed sample solution to at least one of a temperature range of between 1°C and 50°C and a humidity range of between 20% and 100% relative humidity, respectively.

In other words, during the process of dispensing sample solution and/or during the process of spreading the dispensed sample solution, environmental parameters may be specifically controlled. Such environmental parameters may include the temperature and/or the humidity during the respective process. Particularly, the temperature may be controlled to be at least 1°C, preferably at least 2°C, but at most 50°C, preferably at most 40°C. In fact, the temperature may be set depending on a type of sample solution to be dispensed, spread and vitrified. For example, a purified protein solution may be processed at temperatures of typically between 2 to 20°C whereas cellular samples may be processed at temperatures of particularly between 30 and 45°C. Furthermore, the humidity may be controlled to be higher than 20%, preferably at least 60% rel., at least 70% rel or at least 80% rel.

Expressed differently, a preparation chamber may allow controlling environmental parameters such as temperature and humidity during sample preparation such as to e.g. help preserving the sample from temperature jumps and/or control evaporation phenomena after spreading. The preparation chamber may be mounted on top of a vitrification and storage module and may be separated therefrom for example by a trapdoor. The preparation chamber may be insulated for example with polyurethane foam. Furthermore, it may contain a water/air heat exchanger connected to a cryo-compact circulator. Humid air may be supplied to the preparation chamber example from a humidifier module, for example at a typical flow rate of 8 L/min, in order to e.g. limit sample evaporation during the preparation process. The preparation chamber may also feature a lateral opening to insert drop dispenser heads during operation of the entire arrangement. Furthermore, it may be equipped with a camera & backlight, preferably laser backlight system, system for monitoring the sample preparation process. A chamber temperature may typically be set to 2 - 20°C for purified protein solutions in order to avoid any protein denaturation, or to 30 - 45°C for cellular samples to provide a physiological temperature. A humidity may typically be set to 80% RH or more such as to avoid fast evaporation of the thin liquid sample solution layer.

The sample preparation device according to an embodiment of the second aspect of the invention is specifically configured for implementing, executing or controlling the sample preparation method according to one of the embodiments described herein.

Particularly, the sample preparation device may comprise a dispenser for dispensing sample solution on the surface of the sample holder grid. As indicated above, such dispenser may be a picoliter drop dispenser. Furthermore, the sample preparation device may comprise a spreader arrangement for spreading the dispensed sample solution along the surface of the sample holder grid. Such spreader arrangement may comprise one or more shock pressure wave generators. The sample preparation device may further comprise a displacement mechanism configured for controllably and preferably automatically displacing the sample holder grid relative to the shock pressure wave generator. The sample preparation device further comprises a vitrification arrangement for exposing the sample solution on the sample holder grid to a cooling liquid. Specifically, such vitrification arrangement may comprise a coolant jet emitter for emitting a jet of cooling liquid in a direction towards the sample holder grid. A further displacement mechanism may be provided and may be configured for controllably and preferably automatically displacing the sample holder grid relative to the coolant jet emitter.

Additionally to the mentioned components, the sample preparation device may comprise a controller for specifically controlling the components in a manner such as to implement the sample preparation method described herein. Furthermore, additional components may be comprised in the sample preparation device, such as a surface treatment arrangement for treating the surface of the sample holder grid for enhancing its hydrophilic characteristics. Such surface treatment arrangement may comprise for example a plasma generators such as an atmospheric plasma treatment torch, a glow discharge or a plasma-cleaning device.

Additionally, the sample preparation device may comprise further components such as a grid handling module, a preparation chamber, a humidifier module, a liquid ethane jet-vitrification module, a cryo-storage module, a liquid nitrogen regulation system, a sample storage plate and/or a drop dispensing test module. Details of such components, modules and devices will be further described below with reference to preferred embodiments and related figures.

Finally, it should be noted that possible features and advantages of embodiments of the present invention are described herein in connection partly with respect to a sample preparation method and partly with respect to a sample preparation device. One skilled in the art will realize that features described for one type of embodiments may be adapted, transferred, replaced and/or combined with other features described for the same type or another type of embodiments, in order to come to further embodiments of the present invention.

### BRIEF DESCRIPTION OF THE DRAWINGS

Exemplary embodiments of the invention will be described in the following with reference to the attached drawing. Neither the drawing nor the specification shall limit the scope of the inventions and its embodiments.
- Fig. 1: visualises a sequence of steps of a sample preparation method according to an embodiment of the present invention.
- Fig. 2: visualises details of a method step of spreading dispensed sample solution.
- Fig. 3: visualises a pressure waveform of a shock pressure wave.
- Fig. 4: visualises a sample preparation device according to an embodiment of the present invention.

The drawings are only schematic and not to scale. Same or similar elements are referenced with same reference signs throughout the drawings.

### DETAILED DESCRIPTION OF EMBODIMENTS

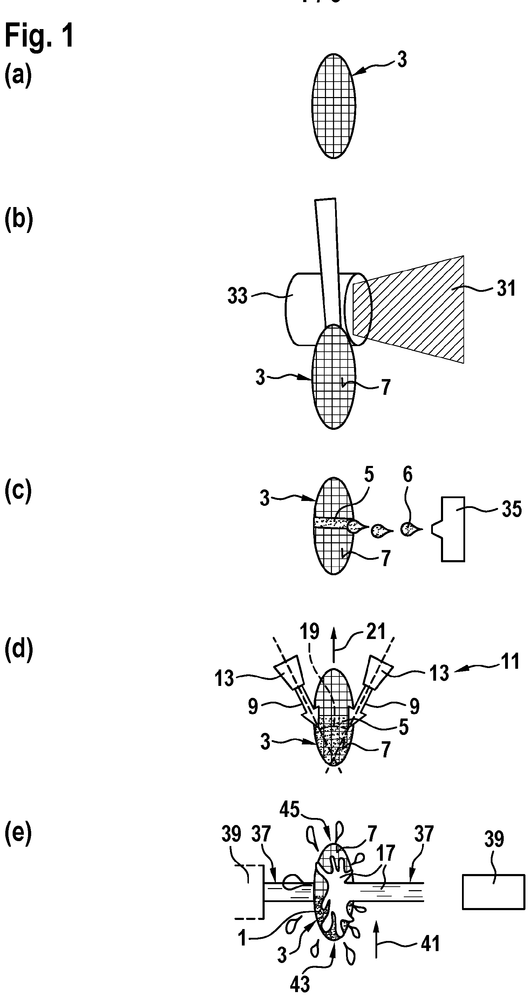

Figure 1 visualises a sequence of method steps for preparing a vitrified sample layer 1 on a sample holder grid 3 for subsequent analysis of physical sample characteristics using for example a cryo electron microscopy.

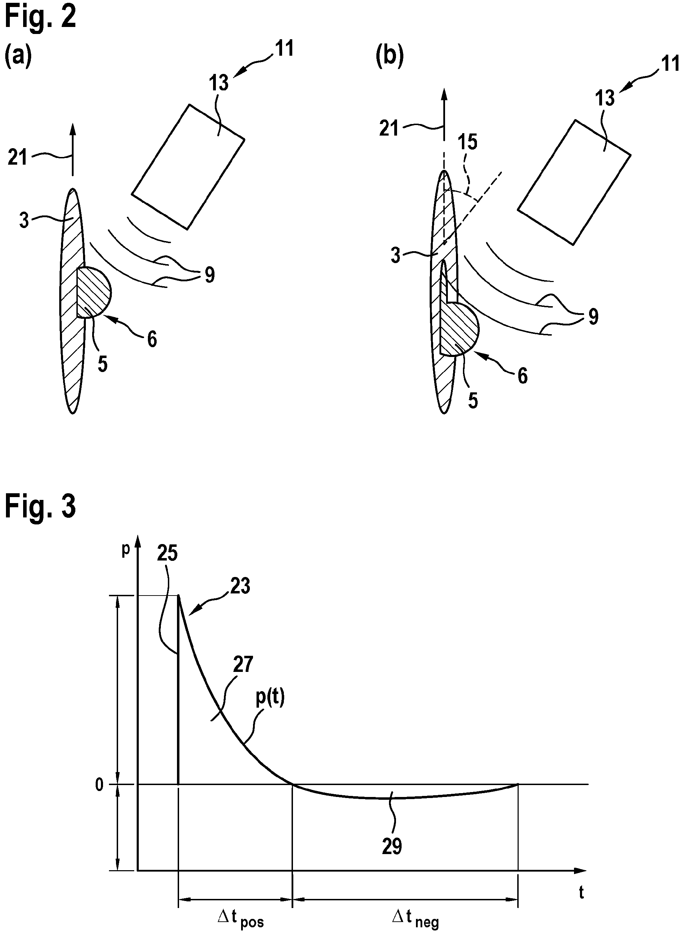

Briefly summarised, the method at least comprises the steps of
- dispensing sample solution 5 on a surface 7 of the sample holder grid 3, as represented in Fig. 1(c);
- spreading dispensed sample solution 5 along the surface 7 of the sample holder grid 3 using a sequence of multiple shock pressure waves 9 generated by a shock pressure wave generator 11 emitting and directing the shock pressure waves 9 via nozzles 13 at a grazing angle 15 (see Fig. 2) onto the surface 7 of the sample holder grid 3, , as represented in Fig. 1(d);
- vitrifying the spread sample solution 5 by exposing it to a cooling liquid 17 at cryogenic temperatures, as represented in Fig. 1(e).

In the example shown, the shock pressure wave generator 11 comprises two separate nozzles 13 arranged adjacent to and at opposing sides of the surface 7 of the sample holder grid 3. The nozzles 13 are arranged and oriented such that the shock pressure waves 9 are ejected from each of the nozzles 13 in directions being arranged at an angle of incidence 19 relative to each other, as shown in Fig. 1(d). Furthermore, the shock pressure waves 9 are ejected from the nozzles 13 in a direction at a grazing angle 15 relative to the surface 7 of the sample holder grid 3, as shown in Fig. 2 (wherein, due to the perspective, only one of the two nozzles 13 is represented).

The shock pressure waves 9 are generated with a maximum pressure of between 0.3 - 4 bar. Each of the shock pressure waves 9 is generated with a duration of 2 - 100 ms. A pause between successive shock pressure waves 9 is 2 - 10 ms. Several shock pressure waves 9, such as for example up to twenty shock pressure waves 9, are generated in a sequence.

As visualized in Fig. 2, during the process of spreading the dispensed sample solution 5, the sample holder grid 3 and the shock pressure wave generator 11 are moved relative to each other in a displacement direction 21 being parallel to the surface 7 of the sample holder grid 3, for example with a velocity of 0.5 - 2 mm per duration of the spreading procedure.

The shock pressure waves 9 used for spreading the sample solution 5 follow a Friedlander waveform 23, as represented in a graph p(t) in Fig. 3, in which the horizontal axis represents the time t and the vertical axis represents the pressure p. Therein, a pressure blast of such shock pressure wave 9 is released with a very steep front-edge 25, i.e. with a very sudden positive pressure rise. In a positive pressure interval Δtₚₒₛ 27, the pressure of the shock pressure wave 9 then successively decreases before entering in a subsequent negative pressure interval Δt_{neg} 29.

When the shock pressure wave 9 with its steep front-edge 25 hits a drop 6 of sample solution 5 dispensed on the surface 7 of the sample holder grid 3, this drop 6 is displaced due to a pressure differential on both sides thereof. Due to the shock pressure wave 9 propagating along the surface 7, the sample solution drop 6 is pushed ahead and will leave a trace forming a thin film of spread sample solution 5 behind it. During the negative pressure interval, an aspiration effect may act onto the spread sample solution 5. Using the sequence of shock pressure waves 9, the sample solution 5 may be spread quickly, e.g. in less than 500 ms, specifically for example in 80 ms, and homogeneously along the surface 7 of the sample holder grid 3.

Additionally to the method steps described above, after having provided the sample holder grid 3 (as visualised in Fig. 1(a)), but before dispensing the sample solution 5 on the sample holder grid 3, the surface 7 of the sample holder grid 3 may be specifically treated for enhancing its hydrophilic characteristics. For such purpose, this surface 7 may be submitted to a plasma 31 generated for example by an atmospheric plasma treatment torch 33 (as visualised in Fig. 1(b)).

In the subsequent step of dispensing the sample solution 5 (as visualised in Fig. 1(c)), typically 5 - 200 drops 6 of sample solution 5, each drop having a typical volume of 20 - 200 pl, may be ejected using a picoliter drop dispenser 35. For example, 100 drops 6 of 70 pl each may be dispensed, thereby applying an overall volume of 7 nl on the surface 7 of the sample holder grid 3. Therein, the drops 6 may be ejected at a dispensing frequency of typically 1 - 10000 Hz. A drop temperature may correspond to a temperature of the sample solution 5 in a reservoir comprised in the dispenser 35 and/or to an environment of such dispenser 35 and may be set to be in a temperature range of 2 - 45°C.

Furthermore, after having spread the sample solution 5 along the surface 7 of the sample holder grid 3, the resulting film of spread sample solution 5 may be vitrified by exposing it to a jet 37 of cooling liquid 17. For example, ethane jets 37 at cryogenic temperatures may be generated by jet generators 39 and directed from opposite sides onto the sample holder grid 3. Particularly, the sample holder grid 3 and the jet 37 may be moved relative to each other such that the coolant jet 37 is successively displaced in a displacement direction 41 (see Fig. 1(e)) for example from a lower first lateral edge 43 of the spread sample solution 5 to an opposite upper second lateral edge 45 of such spread sample solution 5.

Overall, a vitrified layer 1 of sample solution 5 may be generated with high quality, fast preparation and good reproducibility.

Next, some possible details of an embodiment of the sample preparation procedure will be explained, partly with a slightly different wording:

### A) Preparation process

The approach described herein permits to carry out several sample preparation process steps for Cryo-Imaging applications.

Two main sample types are compatible with the system: purified protein (or small particle) solutions and cells in suspension or adherent cells incubated on the sample support.

Before the automated preparation process, a user manually loads storage box(es) into the system by installing them one by one through a loading port. The custom storage boxes are equipped with an RFID tag. Upon box insertion, an antenna installed underneath the loading port reads the identification code of the storage box, associates its unique ID with the slot presented underneath the loading port, and adds the box to a list of available storage containers in a control software.

The sample holders containing empty supports (for the case of SPA and cells in suspension preparation process) or supports with incubated cells (for the case of adherent cell preparation process) are manually installed into the system onto their dedicated slot.

Optionally, there may be a temperature regulated partially gas-tight storage dock for the support containing incubated cells.

### B) A typical sample preparation process for SPA samples may be as follows:

1. Pipetting sample solution from a temperature controlled 96 well plate. For pipetting through dispensing pipettes, we can either use an internal pump of the drop dispenser module, or a precision syringe pusher system, that permits to better manage the volume of the pumped solution.
2. Taking a new grid from the empty-grid rack.
3. Hydrophilic treatment of the sample support. For this step we use an inbuilt atmospheric plasma treatment system.
4. Sample deposition: sample deposition happens in the preparation chamber that is humidity and temperature controlled. The activated sample support is put into a preparation chamber using a gripper robot whilst the pipettes are also inserted into the sample chamber. Typically, one line of solution is deposited on the surface of the sample support at mid height of the round shaped grid, but one can define custom dispensing patterns.
5. Sample spreading: sample spreading is done using the acoustic pressure wave generator. The pressure wave generator contains two fix nozzles set up at a grazing angle. The grid with the dispensed solution is put at the focus point of the nozzles for sample spreading step. Typical parameters that can be varied for this step:
   a. Intensity of the pressure wave (typically 2-4 bars)
   b. Duration, number, delay between the pressure wave blasts
   c. Movement of the grid during the pressure wave generation
   d. Delay time after the spreading step
6. Sample vitrification: Sample vitrification is carried out at an ethane jetting station. A first step is releasing the pressure in the liquid nitrogen reservoir by opening the loading port (duration ~3 seconds). This step permits to avoid cool nitrogen gas flowing upwards into the preparation chamber (upon opening of the trapdoor) that would impair the cooling rate needed for effective vitrification of the sample. The Ethane jet is then started by pressurizing the closed ethane reservoir, and once the colliding jet is established the grid is plunged into the collision point of the ethane jets. The grid is kept in the colliding ethane jets for typically 500 milliseconds that ensures in one hand the proper vitrification of the sample and cools down the metal gripper tips that act as a cold buffer during the subsequent transfer of the sample support from the vitrification point to the storage module. After vitrification step, the grid is rapidly transferred to the storage module and plunged into liquid nitrogen for typically four seconds. After plunging to the liquid nitrogen, the grid is taken to the cryo-blotting station installed on the cryo-storage carrousel. The excess of liquid ethane is blotted away from the sample support by putting in contact the sample grid with a blotting paper installed on a dedicated support on a storage carrousel.
7. Sample storage: After blotting away the excess liquid ethane the storage carrousel is positioned underneath the grid gripper and the vitrified sample is stored in one of the cryo-EM storage boxes installed on the carrousel.
8. Drying: After the preparation sequence, the grid gripper is taken to a dedicated gripper drying station where compressed air is flown on gripper jaws to reheat them and remove any remaining water droplets. The pipette robot is taken to the drop dispense test station. A trapdoor underneath the preparation chamber is closed and compressed air is flown into the preparation chamber for drying. The drying process takes typically 30 seconds, after which the system is ready for the next preparation cycle.

For improved sample spreading, a coating solution (e.g., Blue dextran) may be dispensed and spread on the surface of the sample holder (steps 4 and 5) before applying the solution containing the targeted particles.

### C) Time-resolved cryo-trapping sample preparations process

For studying biochemical reactions in a time resolved manner, one has to trigger reactions and proceed to cryo-trapping at known time points. By varying a delay between start of the reaction and vitrification of the specimen, one can image volatile states of a dynamic process. By putting the images of these volatile states one after the other respecting their associated time points, molecular movies can be established of biochemical reactions.

### Time resolved mixing of sample solutions

To initiate a biochemical reaction, a most straightforward way is mixing two solutions together with a known time delay. Time resolved mixing of sample solutions are based on the typical SPA sample preparation process discussed above in (B).

For longer time delays (e.g. > 300ms), the classical steps of 1, 2, 3, 4 are carried out as described above. Then, a second sample deposition is carried out on top of the first one (i.e., step 4b), with which a biochemical reaction can be triggered.

The rest of the preparation steps may be identical to the ones described above in (B).

For shorter time delays (< 200ms), the second sample deposition, i.e. 4b, is carried out not in top of the first line, but on a parallel line above the first line of sample solution. The two lines are mixed during the spreading procedure (i.e. step 5 discussed above). The rest of the preparation process follows the steps described above in (B).

### Light triggered time resolved cryo-trapping

Another way of initiating a biochemical reaction is using a light stimulus. Flash lamps can interact with sample solution on different manners, e.g., releasing cage compounds, trigger protein movements in natural light sensitive proteins, initiate temperature jump, etc.

To enable this kind of triggering feature, we have implemented a flash lamp in our system.

The light triggering system can provide 1-2ms flashes with wavelengths going from UV to deep IR.

We have defined two light triggered time resolved cryo-trapping process.

For longer time delays (> 300 ms), the sample preparation steps are identical to the ones described in (B)., but after sample dispensing (step 4), the grid is taken in front of the output of the optical fiber, to be illuminated with an appropriate flash light. After illumination the grid preparation follows the steps described in (B).

For shorter time delays (< 300ms), the light fiber output is placed on the path of the grid gripper between the sample spreading module and the jet-vitrification module. In this case the standard sample preparation (described in (B)) steps are carried out, and light triggering of the reaction happens between sample spreading (step 5) and sample vitrification (step 6) while the grid passes in front of the optical fiber.

### D) Typical Preparation steps for cells in suspension

Typical preparation steps for cells in suspension are similar to the one described in (B). Instead of using a purified protein solution, we are using a solution containing cells or mono-cellular organisms in suspension.

### E) Adherent Cell vitrification

In the case of adherent cell preparation, the cells are incubated directly on the sample support and manually inserted into the thermally regulated grid rack ahead of the automated preparation process.

The steps of the automated cell vitrification may be as follows:
1. Taking a new grid containing the incubated cells from the grid rack.
2. Culture medium removal: Culture medium removal is done using the pressure wave generator. The grid with the incubated cells is put at the focus point of the nozzles and a pressure wave is released. Typical parameters that can be varied for this step in order to achieve a suitable liquid thickness around the cells:
   a. Intensity of the pressure wave (typically 2-4 bars)
   b. Duration, number, delay between the pressure wave blasts
   c. Movement of the grid during the pressure wave generation
   d. Delay time after the spreading step
3. Sample vitrification: Sample vitrification is carried out at the ethane jetting station. The first step is releasing the pressure in the liquid nitrogen reservoir by opening the loading port (duration ~3 seconds). This step permits to avoid cool nitrogen gas flowing upwards into the preparation chamber (upon opening of the trapdoor) that would impair the cooling rate needed for effective vitrification of the sample. The Ethane jet is then started by pressurizing the closed ethane reservoir, and once the colliding jet is established the grid is plunged into the collision point of the ethane jets. The grid is kept in the colliding ethane jets for typically 500 milliseconds that ensures in one hand the proper vitrification of the sample and cools down the metal gripper tips that acts as a cold buffer during the subsequent transfer of the sample support from the vitrification point to the storage module. After vitrification step, the grid is rapidly transferred to the storage module and plunged into liquid nitrogen for typically four seconds. After plunging to the liquid nitrogen, the grid is taken to the cryo-blotting station installed on the cryo-storage carrousel. The excess of liquid ethane is blotted away from the sample support by putting in contact the sample grid with a blotting paper installed on a dedicated support on the storage carrousel.
4. Sample storage: After blotting away the excess liquid ethane the storage carrousel is positioned underneath the grid gripper and the vitrified sample is stored in one of the cryo-EM storage boxes installed on the carrousel.
5. Drying: After the preparation sequence the grid gripper is taken to a dedicated gripper drying station where compressed air is flown on the gripper jaws to reheat them and remove any water. The pipette robot is taken to the drop dispense test station. The trapdoor underneath the preparation chamber is closed and compressed air is flown into the preparation chamber for drying. The process takes typically 30 seconds, after which the system is ready for the next preparation cycle

### F) Time-resolved studies on cells

Time-resolved studies can be carried out on cells similarly to the process described in (C) for SPA samples.

### Time-resolved study with external biochemical stimuli or host-pathogen interactions

To study cells response to external biochemical stimuli or host-pathogen interactions on a time resolved manner, we can use the drop dispensing system of the machine described herein to deliver chemical solutions or deliver pathogens directly on the top of the cells, before vitrification, with a known delay.

In case of the cells in suspension, the delivery of these elements is done between the sample deposition and culture medium removal steps.

For longer time delays (>300ms), the elements are dispensed directly on top of the cells whilst for shorter time delays the elements are dispensed on a parallel line above the sample solution line containing the cells, and the mixing is carried out by the pressure wave generator system.

For adherent cells, as a standard preparation process, only longer time delays (>300ms) are possible as the adherent cells can be disseminated all around the surface of the sample support.

With the flash-lamp incorporated into the machine we can proceed to several time-resolved cell vitrification studies. Light can cause temperature jump, release cage compounds, or stimulate naturally light sensitive cells.

For longer time delays (>300ms), the sample grid is exposed to the light before culture medium removal, whilst for shorter time delays (<300ms), the sample grid is exposed to the light just before vitrification, after the culture medium removal step.

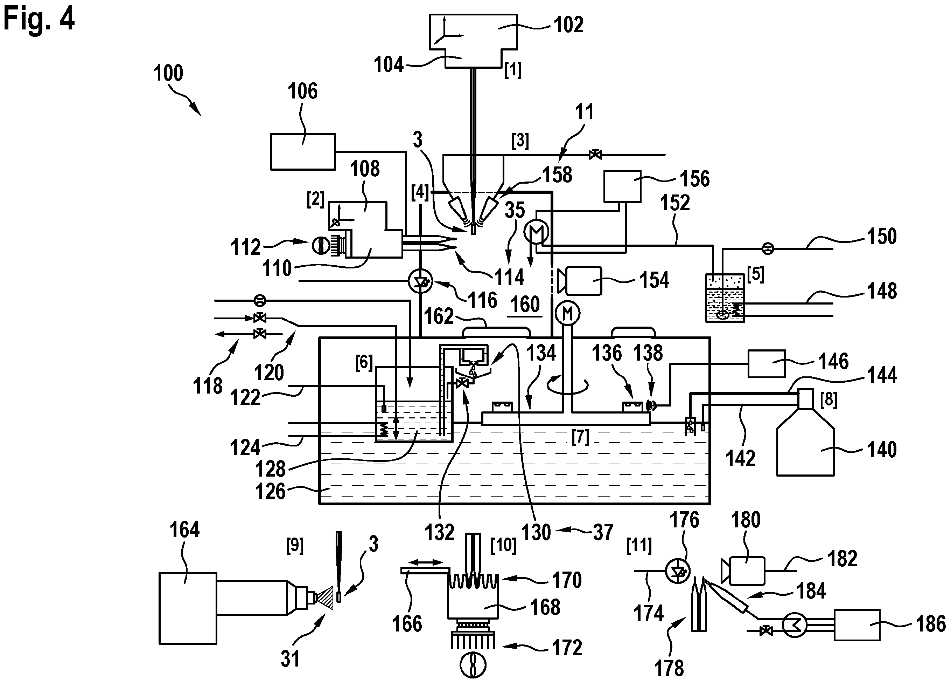

Finally, a simplified schematic diagram of the machine platform including components of a sample preparation device 100 as described herein will be described with reference to Fig. 4 with components numbered as follows:
[1] Grid handling module
[2] Drop dispenser module
[3] Pressure wave generator
[4] Preparation chamber
[5] Humidifier module
[6] Liquid ethane jet-vitrification module
[7] Cryo-storage module
[8] LN2 regulation system
[9] Plasma treatment module
[10] Sample storage plate
[11] Drop dispensing test module.

To carry out tailorable sample preparation protocols, the sample preparation machine contains the following modules:

### 1. Grid handling module

The grid handling module is an industrial pneumatic gripper (Schunk PGN-plus-P 40) mounted on a three axis cartesian robot equipped with absolute position encoders. The cartesian robot ensures precise positioning of the grid gripper at all stages of the preparation procedure.

### 2. Drop dispensing module

The drop dispensing module is composed of a four-axis robot (three cartesian axes and one rotation) that holds a temperature regulated dock, itself equipped with two microfluidic droplet dispenser heads manufactured by Microdrop. Temperature regulation of the pipette dock is mediated by a Peltier element connected to a ventilated heat sink. The custom-designed drop dispenser pipettes have an internal nozzle diameter of 70um and are controlled by a Microdrop SL-T-4166 controller. To program sample dispensing, users can edit the number of drops and dispensing pattern geometry with the corresponding panel of the GUI.

### 3. Pressure wave generator

The pressure wave generator module is composed of two nozzles connected to an ultrafast solenoid valve and supplied by standard oil-free compressed air. The supply pressure is typically set to 2.3 bars. The nozzles are set-up symmetrically to the grid, with a grazing angle of e.g. 20 degrees. The pressure waveforms are tailored by the user e.g.: number of pressure pulses, pulse duration, delay between pulses. The typical waveform we used for preparing macromolecular solutions or adherent cells was a square wave lasting respectively ~30 ms or ~300 ms.

### 4. Preparation chamber

The preparation chamber allows controlling environmental parameters during sample preparation. It is mounted on top of the vitrification and storage module, and it is separated from it by a trapdoor. The chamber is insulated with polyurethane foam and contains a water/air heat exchanger connected to a cryo-compact circulator (Julabo CF31). Humid air is supplied to the chamber from the humidifier module (described below) at a typical flow rate of 8 L/min to limit sample evaporation during the preparation process. The preparation chamber also features a lateral opening to insert drop dispenser heads during system operation, and it is equipped with a camera & laser backlight system to monitor the sample preparation process.

### 5. Humidifier system

The humidifier system is a nebulizer featuring a flow-regulated supply of compressed air, a water tank and an outlet of humid air. The tank of the humidifier system is manually filled with ultra-pure milli-Q water (Millipore). The resistor-based heating system installed on the tank allows heating up the tank to increase air humidity in the nebulizer. The humid air output by the system can be supplied to the preparation chamber to reach > 90% humidity around the grid within a few seconds.

### 6. Liquid ethane-based jet-vitrification module

This module is composed of a closed tank partially immersed in liquid nitrogen (LN2). The tank contains a heating resistor and a temperature sensor allowing fine temperature regulation of the liquid ethane to typically -180 °C. To fill the tank, a flow of 0.8 L/min gaseous ethane (C2H6, (g)) is progressively liquefied in the cold tank. The capacity of the tank is ~40 mL, and filling it takes ~8min. Once the tank is filled, ethane can be jetted by pressurizing the tank with gaseous nitrogen N2, (g) at a flowrate of 0.5 L/min. The N2 gas pushes liquid ethane towards the jetting apertures. These apertures face each other, allowing the collision of ethane jets. Jetted ethane is then collected in a recovery pool. Opening the recycling valve to pour the recovered ethane back into the reservoir allows reusing the same liquid ethane for a whole preparation session and removes the need for refilling the machine with ethane during operation. To empty the ethane tank, a ventilation system allows aspirating ethane away at any time point, typically at the end of a preparation session.

### 7. Cryo-storage module

The cryo-storage plate is a carrousel set up in the Dewar vessel just above the LN2 level to maintain its temperature at -190 °C and to limit ice contamination on stored grids by keeping them in N2 vapor. The carrousel is driven by an absolute-encoded motor able to position box slots either under the user trapdoor to manually load/unload grid boxes, or under the preparation chamber to store prepared grids in cryo-boxes. The carousel features 11 slots to fit custom cryo-EM storage boxes equipped with eCryoID^{™} tags. Upon loading such a box on the carrousel, the unique ID of the box is automatically read and registered in the list of available containers. When storing a grid in a registered box, sample preparation metadata is saved in a text file and indexed to the box ID and slot number.

### 8. LN2 regulation system

Regulation of the LN2 level in the storage Dewar is carried out by a standalone LN2 micro-dosing pump (Norhof #915) that delivers small amounts of LN2 through an insulated tube based on feedback from a sensor placed in the Dewar vessel.

### 9. Atmospheric plasma treatment system

Prior to grid preparation, grid hydrophilicity can be enhanced using an atmospheric plasma treatment system (Plasmatreat FG5001S). The plasma nozzle is set up on a fixed support and the grids are presented in front of nozzle using the gripper robot. The typical plasma treatment procedure is as follows: (1) plasma generation, (2) moving the grid back and forth through the plasma, perpendicularly to the nozzle, at a speed of 250 mm/s and at a distance of 12 mm, (3) plasma termination. The plasma torch outputs a power of 1 kVA at a frequency of 21 kHz. Typically, ten to twenty of passages are executed during step (2) to adjust grid surface properties to specific sample solutions.

### 10. Sample storage module

The sample storage module is a thermo-regulated dock in which a standard low-profile PCR plate is inserted. The dock is equipped with a lid that can be opened and closed using a pneumatical jack to cover the PCR plate and improve thermal regulation, which is carried out by a Peltier element connected to a ventilated heat-sink. The temperature of the module can be freely set between 4 °C and 38 °C. Sample solutions are manually pipetted in the PCR plate, then automatedly picked-up by the drop dispensing module just before sample preparation. Typically, a volume of ~40 µL is used for purified protein samples. The sample storage module can be supplied with oxygen free gas when working with cell cultures that need oxygen free environment.

### 11. Drop dispensing test module

Once the drop dispenser heads are filled, droplet dispensing parameters (i.e., piezoelectric waveform and voltage commanding individual droplet dispensing events) are tested in front of a camera to establish a monodisperse dispensing regime. The drop dispensing test module is composed of a camera and a stroboscopic backlight synchronized on drop dispensing events. An air-blowing nozzle connected to a cryo-compact circulator (Julabo CF31) through an air/water heat exchanger flows temperature-controlled compressed air at 5 L/min on the dispenser heads to keep them at a desired working temperature (4-38°C). Drop dispensing is considered suitable for sample delivery on grids when individual drops of sample solution appear at the same position on successive stroboscopic images (monodisperse regime), and their trajectory is aligned with the central axis of the dispenser head.

In Fig. 4, the sample preparation device 100 comprises the components 102 - 184 as indicated in the list of reference signs below.

Finally, the term "comprising" does not exclude other elements or steps, and the indefinite article "a" or "an" does not exclude a plurality. The mere fact that certain measures are re-cited in mutually different dependent claims does not indicate that a combination of these measures cannot be used to advantage. Any reference signs in the claims should not be construed as limiting the scope.

### LIST OF REFERENCE SIGNS

- 1: vitrified sample layer
- 3: sample holder grid
- 5: sample solution
- 6: sample solution
- 7: surface of the sample holder grid
- 9: shock pressure waves
- 11: shock pressure generator
- 13: nozzle
- 15: grazing angle
- 17: cooling liquid
- 19: angle of incidence
- 21: displacement direction
- 23: Friedlander waveform
- 25: steep front-edge
- 27: positive pressure interval
- 29: negative pressure interval
- 31: plasma
- 33: atmospheric plasma treatment torch
- 35: picoliter drop dispenser
- 37: jet of cooling liquid
- 39: jet generator
- 41: displacement direction
- 43: first lateral edge
- 45: second lateral edge

- 100: sample preparation device
- 102: gripper XYZ robot
- 104: gripper
- 106: microdrop controller
- 108: dispenser XYZRx robot
- 110: pipette dock
- 112: temperature regulator
- 114: drop dispenser
- 116: backlight
- 118: ethane evacuation tubing
- 120: 2 way selector
- 122: temperature sensor
- 124: heater
- 126: LN2 Dewar
- 128: ethane reservoir
- 130: ethane jet
- 132: ethane recovery valve
- 134: rotating storing plate
- 136: grid storage box
- 138: RFID antenna
- 140: LN2 Top-up system
- 142: level sensor
- 144: LN2 supply
- 146: RFID tag reader
- 148: heater
- 150: air inlet
- 152: humid air
- 154: camera
- 156: chiller
- 158: pressure wave generator
- 160: preparation chamber
- 162: trapdoor
- 164: plasma treatment head
- 166: lid
- 168: sample storage plate dock
- 170: sample storage 96 well PCR plate
- 172: temperature regulator
- 174: flash trigger
- 176: backlight
- 178: drop dispenser
- 180: camera
- 182: camera trigger
- 184: cooling nozzle
- 186: chiller

## Claims

1. Sample preparation method for preparing a vitrified sample layer (1) on a sample holder grid (3) for subsequent analysis of physical sample characteristics, particularly for subsequent cryo electron microscopy, the method comprising:
- providing the sample holder grid (3) with sample solution (5) on at least one surface of the sample holder grid (3);
- spreading the sample solution (5) along the surface (7) of the sample holder grid (3) using one or a sequence of multiple shock pressure waves (9) being generated by a shock pressure wave generator (11) emitting and directing the one or multiple shock pressure waves (9) via at least one nozzle (13) onto the surface (7) of the sample holder grid (3);
- vitrifying the spread sample solution (5) by exposing it to a cooling liquid (17) at cryogenic temperatures.

2. Sample preparation method according to claim 1,
wherein the shock pressure wave generator (11) is emitting and directing the one or multiple shock pressure waves (9) at a grazing angle (15) onto the surface (7) of the sample holder grid (3).

3. Sample preparation method according to one of claims 1 and 2,
wherein the shock pressure waves (9) are generated by a shock pressure wave generator (11) emitting and directing the shock pressure waves (9) via two nozzles (13) being arranged at opposing sides of the sample holder grid (3) such that shock pressure waves (9) emitted via the opposing nozzles impact onto opposing surfaces of the sample holder grid (3) such as to equilibrate orthogonal forces effected by the shock pressure waves onto the sample holder grid (3).

4. Sample preparation method according to any of the preceding claims, wherein the shock pressure waves (9) are generated with a maximum pressure of between 100 and 10000 hPa.

5. Sample preparation method according to any of the preceding claims, wherein the shock pressure waves (9) are generated with durations of a positive pressure interval (27) being between 1 ms and 500 ms.

6. Sample preparation method according to any of the preceding claims, wherein the sequence of multiple shock pressure waves (9) comprises between 2 and 100 pressure waves.

7. Sample preparation method according to any of the preceding claims, wherein the shock pressure waves (9) are generated with a pause between subsequent shock pressure waves (9) being between 1 ms and 50 ms.

8. Sample preparation method according to any of the preceding claims, wherein, during the spreading of the dispensed sample solution, the sample holder grid (3) and the shock pressure wave generator (11) are moved relative to each other in a displacement direction (21) parallel to the surface (7) of the sample holder grid (3).

9. Sample preparation method according to claim 7,
wherein, while spreading the sample solution (5) along the surface (7) of the sample holder grid (3), the sample holder grid (3) and the shock pressure wave generator (11) are moved relative to each other by a distance of between 0.1 mm and 5 mm.

10. Sample preparation method according to any of the preceding claims, wherein the method further comprises, prior to a dispensing of sample solution:
treating the surface (7) of the sample holder grid (3) for enhancing its hydrophilic characteristics.

11. Sample preparation method according to claim 10,
wherein the surface (7) of the sample holder grid (3) is treated by submitting it to a plasma (31), particularly to a plasma generated by one of an atmospheric plasma treatment torch (33), glow discharge and plasma-cleaning.

12. Sample preparation method according to any of the preceding claims, wherein the sample solution (5) is dispensed using a picoliter drop dispenser (35) dispensing between 1 and 500 drops (6) of the sample solution (5) onto the surface (7) of the sample holder grid (3) with at least one of the following conditions applying:
- the drops (6) have a volume of between 5 pl and 500 pl;
- a dispensing frequency is between 0.5 Hz and 20000 Hz;
- a drop temperature is between 1°C and 60°C.

13. Sample preparation method according to any of the preceding claims, wherein the spread sample solution (5) is vitrified by exposing it to a jet (37) of cooling liquid (17).

14. Sample preparation method according to claim 13,
wherein, during vitrifying the spread sample solution (5), the sample holder grid (3) and the jet (17) of cooling liquid (17) are moved relative to each other such that the jet (37) of cooling liquid (17) moves from one lateral edge (43) of the spread sample solution (5) to an opposite lateral edge (45) of the spread sample solution (5).

15. Sample preparation method according to any of the preceding claims, further comprising controlling environmental parameters including at least one of a temperature and a humidity during at least one of the dispensing sample solution and the spreading the dispensed sample solution to at least one of a temperature range of between 1°C and 50°C and a humidity range of more than 20% relative humidity, respectively.

16. Sample preparation device (100) being configured for at least one of implementing, executing and controlling the sample preparation method according to any of the preceding claims.
